# EUROPEAN PATENT APPLICATION

(11) **EP 1 631 079 A1**
(43) Date of publication of application: **01.03.2006**
(21) Application number: 04020648.4
(22) Date of filing: 31.08.2004
(51) Int. Cl.: H04N 5/46, H04N 9/64

(54) **A mobile television receiver and method for automatically identifying the transmission standard of broadcast television signals**

(71) Applicant: Harman Becker Automotive Systems GmbH, 76307 Karlsbad (DE)
(72) Inventor: Zahm, Michael, 76337 Waldbronn (DE); Ratzel, Achim, 76307 Karlsbad-Spielberg (DE); Köhler, Stefan, 75210 Keltern (DE)
(74) Representative: Grünecker, Kinkeldey, Stockmair & Schwanhäusser Anwaltssozietät

(57) **Abstract**

A mobile diversity television receiver comprising at least one reception antenna (1a..1n) for receiving an analog or digital broadcast television signal according to a transmission standard unknown to the receiver, at least one tuning unit (3) adapted to tuning itself to the received television signal and for outputting an intermediate frequency signal, a frequency spectrum analyzer for analyzing the intermediate frequency signal prior to demodulation or decoding, and identification means for determining the transmission standard on the basis of the results obtained from the frequency spectrum analyzer. The invention further concerns a corresponding method of operating the receiver.

## Description

The invention relates to a mobile diversity TV receiver capable of receiving analog or digital broadcast television signals according to a transmission standard, which is unknown to the receiver. Further, the invention relates to a method for automatically identifying such unknown transmission standard.

So-called multi-standard receivers are known in the art and able to receive broadcast television signals according to various transmission standards, for instance, PAL, SECAM and NTSC. Manufacturers and users have well received such multi-standard receiving devices as in the first instance in areas where multiple transmission standard signals are broadcast, they can be received simultaneously, which allows to select a preferred reception. Further, receivers that are technically capable of receiving multiple transmission standards are sold worldwide in the same configuration and are only adapted to the corresponding transmission standard on a local basis. However, multi-standard receivers of this type have the disadvantage that the desired transmission standard must be adjusted manually or even that the receiving circuit is designed as a standard for a certain transmission standard and must then be expanded to receive other or further transmission standards by means of additional circuits, generally in form of a plug-in module.

To solve such deficiencies, circuit arrangements for the identification of a transmission standard and automatic adaption of the circuitry, for instance, the chrome processor to a corresponding operating mode has been disclosed, for example, in US 5,657,090.

Another example of a circuit arrangement for identifying the transmission standard of a color television signal is known from US 5,136,369 disclosing a recognition circuit, which includes detectors for determining the frequency of the chrominance subcarrier and additional circuitry, which determines the vertical deflection frequency of the television signal and ascertains whether the subcarrier has a line-sequentially alternating phase for unambiguously identifying the standard of the television signal to be decoded. Further, the circuit arrangement comprises means for adjusting the decoder to this standard.

The above-described and commonly known receivers are mainly used as stationary devices and the operation of transmission standard is typically conducted prior to first use in an initialization phase. The involved operations are often complex and consume a considerable time span that is unacceptable for power on operation in everyday use. Moreover, when the television receiver is embodied as a mobile receiver to be carried by vehicles, such as automobiles, trains, airplanes or ships, the reception characteristics of the receivable broadcast stations vary steadily, which may require a frequent switchover, not only of the channels, but also to transmission signals of different standards.

Moreover, with the increasing spread of digital transmission methods, such as digital video broadcast a need for frequent switchover from reception of analog to digital broadcast television signals and vice versa has arisen as not all spatial areas are already covered by digital transmission broadcast. For instance, when the mobile television receiver is in an area of good coverage by digital broadcast television signals, this may be the preferred user's choice. As the mobile receiver moves along, it might reach an area, where broadcast reception of the digital television signal deteriorates, forcing to switchover to an analog broadcast television signal.

As a result, modem television receivers are typically embodied as so-called "diversity" receivers having analog and digital receivers and corresponding signal processing paths including demodulators and decoders. An example for such diversity receiver is known from DE 19639237 C2. Moreover, such diversity receivers are typically provided with an additional background tuner for constantly scanning the available spectrum for analog or digital television signals, which are receivable with good reception characteristics.

However, such background search requires not only a tuning unit, but also a full signal processing path including a demodulator. The provision of the signal processing paths, demodulators and decoders results in undesirable costs and complexity of the diversity receivers and is a potential source for failures.

Consequently, the invention seeks to provide a simplified and fast way of determining the transmission standard of the received broadcast signal, in particular to allow a discrimination between an analog and digital television signal resulting in reduced manufacturing costs for the diversity receiver and a correspondingly simplified method of operation same.

The invention provides a mobile diversity TV receiver comprising the features of claim 1 and a method of operating same comprising the steps as defined in claim 12.

The invention underlies the idea of using a frequency spectrum analyzer for analyzing the television signal at the intermediate frequency stage, i.e. prior to demodulation or decoding. Further, it involves an identification means for determining the transmission standard on the basis of the frequency spectrum analysis of the intermediate frequency signal.

With the proposed solution, the need for a demodulator or decoder of the analog or digital television signal is obviated and allows an early discrimination between analog and digital signals and the corresponding transmission standard.

According to a preferred implementation, the identification means are adapted to discriminate between an analog single carrier or a digital multi-carrier television signal.

According to an advantageous embodiment, the frequency spectrum analyzer comprises a maximum level detector for outputting an envelope signal of the intermediate frequency signal. The analysis of the envelope signal allows for a fast and reliable detection of peaks in the frequency spectrum to determine the channel spacing and positions of the video carrier, the chrominance carrier and the audio carrier. Such positions and respectively spacings from each other allow for a reliable identification of the broadcast transmission standard.

A further improvement is attained if the frequency spectrum analyzer comprises a filter for applying only a portion of the complete spectrum to the maximum level detector.

According to preferred implementation, the receiver comprises means for obtaining measurements on the signal quality of the received broadcast television signal. Using such quality measurements enable the analysis of only those television signals that are potential candidates with satisfactory reception characteristics.

According to a preferred embodiment of the diversity receiver, a plurality of analog or digital receiving paths are provided and a selector for selectively applying the received television signal to a selected one of the receiving paths in accordance with the identified transmission standard.

According to a further advantageous embodiment, the diversity receiver comprises a plurality of antennas, which are either in a one-to-one fashion or in combination connected with the tuning unit or receiving path.

The invention will become more apparent from the following description of a preferred embodiment using the accompanying drawings, which show:
- **Figure 1**: a preferred implementation of a mobile diversity television receiver according to the invention,
- **Figure 2**: a flowchart for explaining the operation in the diversity receiver according to the invention,
- **Figure 3A**: an exemplary analog frequency spectrum of a television signal, and
- **Figure 3B**: an exemplary spectrum of a digital television signal.

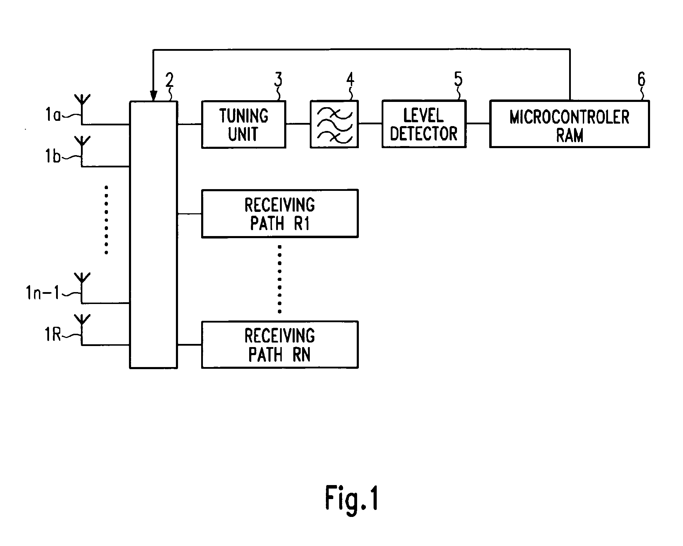

Figure 1 shows a diversity receiver for explaining an embodiment of the present invention. More specifically, the diversity receiver comprises a plurality of receiving paths R₁... Rₙ which are only illustrated in the figure in block diagram form.

The analog or digital receiving paths comprise suitable circuitry for processing an analog or digital broadcast television signals. Moreover, the receiving paths may comprise logic circuits, which may be adapted to process either analog or digital signals of any common standard, such as PAL, SECAM, NTSC or DVBT.

The details of each receiving path is assumed to be known to those skilled in the art. Typical circuitry comprises one or several frequency converters to obtain intermediate frequency signals, filters, oscillators, phase locked loops and mixers. A typical arrangement is shown, for instance, in DE 19639237 C2, where after two frequency conversion stages, the analog or digital signal is applied to an analog signal demodulator or digital signal decoder to obtain an output signal.

The diversity receiving path receives from a plurality of antennas 1a, 1b...1n-1, 1n, a plurality of television signals, i.e. the receiver performs spatial or any other kind of antenna diversity. The selector 2 applies the received signals from one or a plurality of antennas to a selected receiving path or tuning unit 3 in accordance with a control signal applied to the selector 2 as will be described further below.

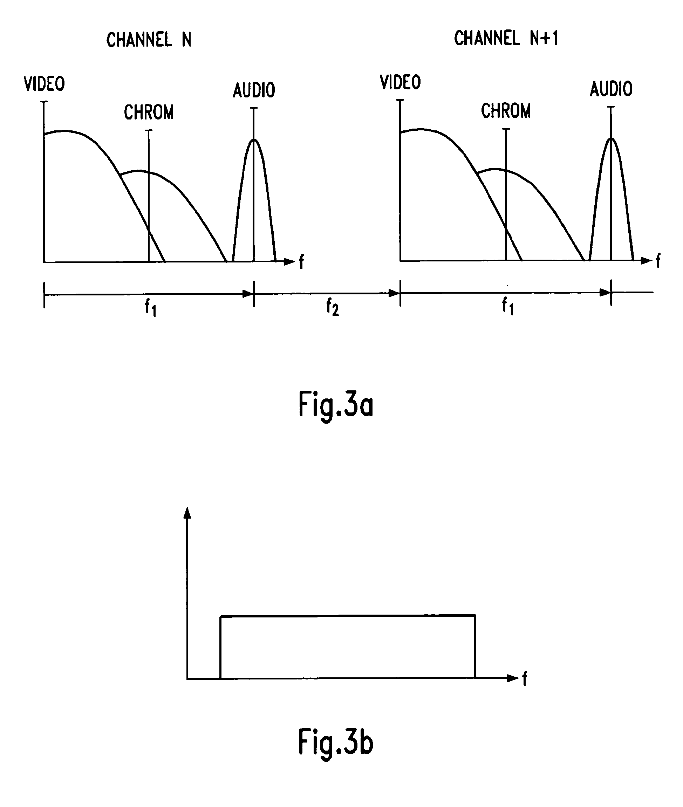

Details of the structure of the tuning unit 3 are also believed to be known to those skilled in the art. Again an example is provided in DE 19639237 C2. Subsequently, the signal is applied to a bandpass filter 4, which is configured, such that the maximum level detector 5 only receives a portion of the spectrum of the received broadcast channel. Generally, the tuning unit generates an intermediate frequency output signal of which by means of the maximum level detector 5, an envelope is determined. Examples for the envelope signals are shown in figure 3A for an analog signal and in figure 3B for a digital signal.

As a apparent therefrom, it is fairly easy to discriminate between analog and digital broadcast signals due to the fact that an analog signal is typically a single carrier signal, whereas the digital television signal is a multi-carrier signal. Moreover, by analyzing the peaks in the frequency spectrum, the positions of the video signal carrier, the chrominance carrier and the audio carrier and their respective spacings may be determined in a straightforward manner. Further, the channel spacing is also easily obtained.

As known in the art, the different television signal standards have different channel spacings and different spacings between the video signal carrier and the audio carrier. For instance, the spacing between the video signal carrier and the audio carrier is 4.5 MHz for NTSC, 6.0 MHz for PAL and 5.6 MHz for SECAM. Consequently, by determining the characteristic points in the envelope signal, for instance, channel spacing or positions of the carriers, a reliable identification of the standard of the broadcast transmission signal can be attained. This procedure is carried out in the spectrum analyzer and identifying unit 6 as shown in figure 1.

Details of the spectrum analyzer are known to those skilled in the art. An example of a spectrum analyzer for determination of a television signal is described in US 6,140,809 comprising two stages of frequency converters and subsequent demodulation means for demodulating the signal from the earlier stage frequency converters. The demodulated output signal may be monitored in a time domain, while a frequency spectrum of the input signal is displayed in a frequency domain simultaneously.

Upon analyzing the signal and determining whether it is an analog or digital signal and identifying the transmission standard, this information is used to control the selector 2. This information may possibly be supplemented with information on the signal quality, which can also be obtained from the spectrum analyzer 6. As a result, under control of the selector 2, it is determined, which input signals at the receiving antennas 1 a... 1 n are applied to the receiving paths R₁... R_{N}. For example, it might be that a digital television broadcast signal is received best from three particular antennas simultaneously and hence, their antenna output signals are applied to a respective digital receiving path. However, another combination of antennas might prove to have the best reception characteristics for application of an analog television signal to an analog receiving path.

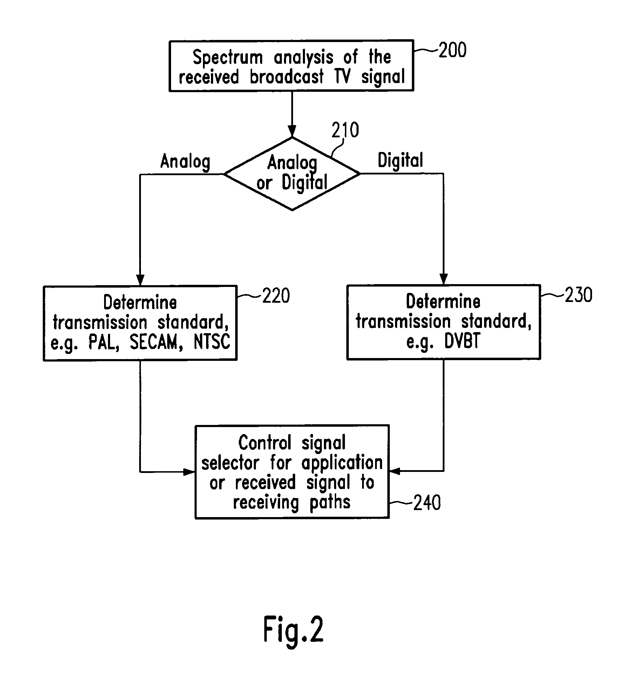

Figure 2 illustrates the steps of operating the mobile diversity TV receiver according to the method of the invention.

In the initial step 200, the broadcast television signal as received from one or a plurality of antennas is subject to a spectrum analysis.

In step 210, it is first discriminated whether it is an analog or digital broadcast signal. In case of an analog signal, it is then determined which particular transmission standard, e.g. PAL, SECAM or NTSC has been used. As mentioned before, this is preferably dealt by determining an envelope signal and obtaining information on the position of the carriers and the channel spacings. Once the transmission standard is determined in step 220, a control signal is generated for the selector to apply the signals output from one or more of the receiving antennas to a suitable receiving path as indicated in step 240.

In case of a determination of a digital signal in step 210, the transmission standard, e.g. DVBT is determined in 230 before proceeding with step 240.

The benefits of the present invention result from the early analysis of the envelope of the received broadcast television signal, which is performed at the intermediate frequency stage. Subsequently, without the need of involving a demodulator or decoder, it is determined in a reliable manner, which transmission standard has been used for the received broadcast television signal. Finally, the selector controls application of the signals received from the diversity antennas to the respective analog or digital receiving path. Consequently, application of the principles of the present invention result in a simplified and cost-effective structure of the mobile diversity television receiver.

## Claims

1. A mobile diversity television receiver comprising:
at least one reception antenna (1a..1n) for receiving an analog or digital broadcast television signal according to a transmission standard unknown to the receiver;
at least one tuning unit (3) adapted to tuning itself to the received television signal and for outputting an intermediate frequency signal;
a frequency spectrum analyzer (6) for analyzing the intermediate frequency signal prior to demodulation or decoding; and
identification means (6) for determining the transmission standard on the basis of the results obtained from the frequency spectrum analyzer.

2. The mobile diversity television receiver according to claim 1, wherein the identification means (6) are adapted to discriminate between a single carrier analog television signal and a multi-carrier digital broadcast television signal.

3. The mobile diversity television receiver according to claim 1 or 2, further comprising a level detector (5) for outputting an envelope signal of the intermediate frequency signal.

4. The mobile diversity television receiver according to claim 3, further comprising a filter (4) for applying only a portion of the frequency spectrum to the level detector (5).

5. The mobile diversity television receiver according to claim 4, wherein the identification means (6) are adapted to determine the channel spacing of the received broadcast television signal.

6. The mobile diversity television receiver according to one of claims 1 to 5, wherein the identification means (6) are adapted to determine the position of the video signal carrier and the audio carrier within the frequency spectrum.

7. The mobile diversity television receiver according to one of claims 1 to 6, wherein the spectrum analyzer (6) further comprises means for obtaining signal quality measurements of the received broadcast television signal.

8. The mobile diversity television receiver according to one of claims 1 to 7, further comprising a plurality of analog or digital receiving paths (R₁... R_{N}) and a selector (2) for selectively applying one or a plurality of received broadcast television signals to a selected one of the receiving paths (R₁...R_{N}) in accordance with the results of the frequency spectrum analyzer (6).

9. The mobile diversity television receiver according to one of claims 1 to 8, further comprising a plurality of antennas (1a...1n), which are selectively or in combination connected to the tuning unit (3) or to the receiving paths (R₁..R_{N}).

10. The mobile diversity television receiver according to one of claims 1 to 9, wherein the receiving paths are adapted to process analog television signals according to at least one of the PAL, SECAM or NTSC standard.

11. The mobile diversity television receiver according to one of claims 1 to 9, wherein the receiving paths (R₁... R_{N}) are adapted to process a digital broadcast television signal according to the DVBT standard.

12. A method of operating a mobile diversity television receiver comprising the steps of:
receiving an analog or digital broadcast television signal according to a transmission standard unknown to the receiver;
tuning the receiver to the received television signal and outputting an intermediate frequency signal;
analyzing the intermediate frequency signal prior to demodulation or decoding; and
identifying the transmission standard on the basis of the results obtained from the frequency spectrum analysis.

13. The method according to claim 12, wherein the identification steps includes discriminating between a single carrier analog television signal and a multi-carrier digital broadcast television signal.

14. The method according to claim 12 or 13, wherein the frequency spectrum analysis comprises performing level detection for outputting an envelope signal of the intermediate frequency signal.

15. The method according to claim 14, wherein the frequency spectrum analysis comprises performing filtering the television signal for applying only a portion of the frequency spectrum to the level detection.

16. The method according to claim 15, wherein the identification step (6) further comprises determining the channel spacing of the received broadcast television signal.

17. The method according to one of claims 12 to 16, wherein the identification step comprises determining the position of the video signal carrier and the audio carrier within the frequency spectrum.

18. The method according to one of claims 12 to 17, wherein the frequency spectrum analyzing step comprising obtaining quality measurements of the received broadcast television signal.

19. The method according to one of claims 12 to 18, further comprising the step of selectively applying one or a plurality of received broadcast television signals to a selected one of the receiving paths in accordance with the result of the frequency spectrum analysis.

20. The method according to one of claims 12 to 19, wherein the analog television signal is according to at least one of the PAL, SECAM or NTSC standard.

21. The method according to one of claims 12 to 19, wherein the digital broadcast television signal is according to the DVBT standard.
